# EUROPÄISCHE PATENTSCHRIFT

(11) **EP 0 909 949 B1**
(45) Veröffentlichungstag und Bekanntmachung des Hinweises auf die Patenterteilung: **12.02.2003**
(21) Anmeldenummer: 98119644.7
(22) Anmeldetag: 16.10.1998
(51) Int. Cl.: G01N 27/07

(54) **Messwertaufnehmer zur Erfassung der elektrischen Leitfähigkeit eines flüssigen Mediums**
Sensor for measuring the electrical conductivity of a liquid medium
Capteur pour mesurer la conductibilité électrique d'un milieu liquide

(30) Priorität: 17.10.1997 DE 19746075
(43) Veröffentlichungstag der Anmeldung: 21.04.1999
(73) Patentinhaber: Gebrüder Heyl Analysentechnik GmbH & Co. KG, 31135 Hildenheim (DE)
(72) Erfinder: Dölling, Werner, 31097 Immenseul (DE)
(74) Vertreter: HOFFMANN - EITLE

(56) Entgegenhaltungen:
- DE-A- 4 040 333
- US-A- 3 710 237
- US-A- 4 383 221
- US-A- 4 496 906
- US-A- 4 808 931

## Beschreibung

Die Erfindung betrifft einen Meßwertaufnehmer zur Erfassung der elektrischen Leitfähigkeit eines flüssigen Mediums.

Derartige Meßwertaufnehmer sind in vielfältigen Ausführungen bekannt. So ist aus EP-A-0 386 660 ein Meßwertaufnehmer zur Messung der Leitfähigkeit eines Fluids bekannt, bei dem mehrere Elektroden in Form von Metallringen an einer Stirnfläche eines zylindrischen Sondenkörpers angeordnet sind.

DE-A-2802 182 beschreibt ein Meßgerät zum Messen des elektrischen Widerstandes einer Flüssigkeit mit mehreren plattenförmigen Elektroden, die in einem gemeinsamen Hüllzylinder angeordnet sind. Aus EP-A-0 193 015 ist es bekannt, bei einem Sensor zur Messung der elektrischen Leitfähigkeit für die Überwachung von Verbrennungsvorgängen wenigstens zwei Elektroden mit Zuleitungen in Form von Leiterbahnen auf einem isolierenden, hitze- und korrosionsbeständigen Substrat anzuordnen und die Zuleitungen mit Ausnahme der Kontaktstellen mit einem hitze- und/oder korrosionsbeständigen Dielektrikum abzudecken.

EP-B-0 113 427 beschreibt eine elektrische Meßsonde zum Erfassen der elektrischen Leitfähigkeit eines flüssigen Meßgutes, wobei Elektroden zur Bildung einer in Sondenlängsrichtung vorgesehenen Meßstrecke, die vom Meßgut durchflossen wird, zusammen mit vom Meßgut abgechirmten elektrischen Zuleitungen ein mechanisch stabilisierendes und elektrisch leitendes Leitergerüst eines die Form der Sonde bestimmenden Hüllkörpers bilden, der aus thermoplastischem Kunststoff im Spritzgußverfahren hergestellt ist. Eine ähnliche Sonde ist auch in DE 30 06 877 beschrieben.

Weitere Messwertaufnehmer sind aus US4496906, US4808931 und DE4040333 bekannt.

Der Erfindung liegt die Aufgabe zugrunde, einen Meßwertaufnehmer zur Erfassung der elektrischen Leitfähigkeit eines flüssigen Mediums zu schaffen, bei dem bei einem vergleichsweise einfachen, trotzdem aber stabilen Aufbau des Gerätes das Streufeld der Meßstrecke durch äußere Einflüsse wie auch durch die Art des Einbaus und der Lage in einem das Medium aufnehmenden Behälter oder in der Strömung des Mediums möglichst wenig beeinflußt wird, ohne daß eine zusätzliche Abschirmung vorgesehen werden muß.

Erfindungsgemäß wird diese Aufgabe mit den Merkmalen des Patentanspruchs 1 gelöst.

Weiterbildungen der Erfindung ergeben sich aus den Unteransprüchen.

Der erfindungsgemäße Meßwertäufnehmer ermöglicht eine hohe, von äußeren Einflüssen weitgehend unabhängige Meßgenauigkeit bei der Erfassung der Leitfähigkeit eines flüssigen Mediums. Er ist kostengünstig herstellbar und hält auch einer relativ wenig schonenden Behandlung im Betrieb dauerhaft stand.

Bevorzugte Ausführungsformen der Erfindung sind im folgenden anhand der Zeichnungen näher beschrieben.

In den Zeichnungen zeigen, jeweils in schematischer Darstellung,
- Fig.1: Teile einer Ausführungsform des erfindungsgemäßen Meßwertaufnehmers in perspektivischer Darstellung und
- Fig. 2: die Ausführungsform gemäß Fig. 1 im Längsschnitt.

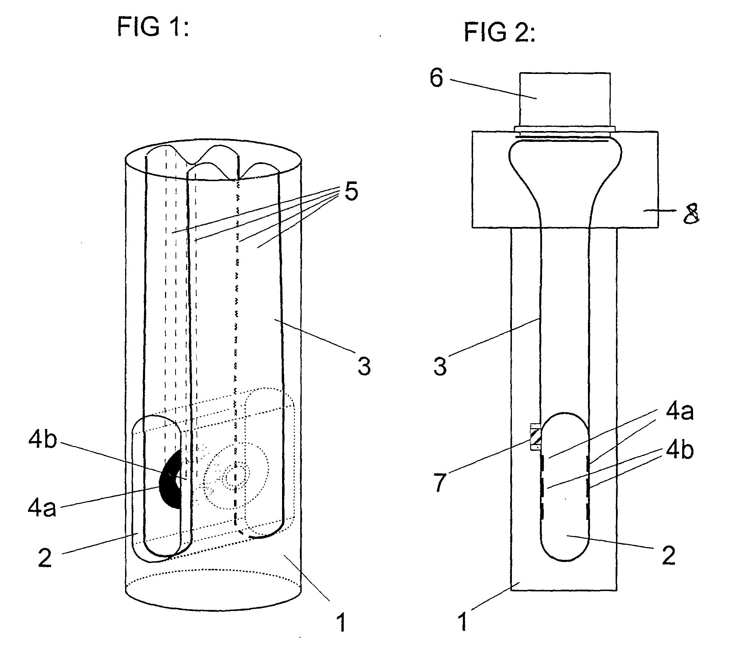

Die in Fig. 1 und 2 dargestellte Ausführungsform des erfindungsgemäßen Meßwertaufnehmers besteht aus einem Sondenkörper 1, der durch einen Block aus elektrisch isolierendem Kunststoff gebildet ist und eine zylindrische oder stabförmige längliche Gestalt mit kreisförmigem oder ovalem Querschnitt aufweist. In der Darstellung in Fig. 1 und 2 besitzt er in einem unteren Bereich eine zur Längsachse des Sondenkörpers 1 radial verlaufende Aussparung 2, die einen an beiden Enden offenen, durch den Sondenkörper 1 hindurchreichenden Kanal bildet.

Bei der in den Zeichnungen dargestellten Ausführungsform des Meßwertaufnehmers ist am oberen Ende des zylindrischen Sondenkörpers 1 ein radial vorstehendes Endstück 8 ausgebildet, das nur in Fig. 2 dargestellt ist und dazu dienen kann, den Meßwertaufnehmer in einer möglicherweise vorgesehenen größeren Meßvorrichtung oder in einer Aufbewahrungseinrichtung zu lagern oder zu befestigen. Von der Anordnung eines derarigen, radial vorstehenden Endstückes kann ggf. auch abgesehen werden. Es ist auch möglich, statt des radial vorstehenden Endstückes 8 ein in den Zeichnungen nicht dargestelltes Griffstück vorzusehen, mit dem der Meßwertaufnehmer von Hand in flüssiges Medium eingesetzt und darin während der Dauer der Messung gehalten werden kann.

Im Innneren des Sondenkörpers 1 erstreckt sich in axialer Richtung fast über die gesamte Länge desselben eine aus flexiblem Material gebildete Leiterplatte 3, die U-förmig gebogen ist und mit den freien Enden ihrer beiden Schenkel bis an den Rand der oberen Begrenzung des Sondenkörpers 1 reicht.

Auf einander gegenüberstehenden innenseitigen Flächen der beiden Schenkel der U-förmigen Leiterplatte 3 sind in Höhe der Aussparung 2 je ein Paar von Elektroden 4a, 4b in gegenseitigem Abstand parallel zueinander so angeordnet, daß sich die Elektroden 4a bzw. 4b der beiden Elektrodenpaare in der Aussparung 2 jeweils gegenüberstehen. Jedes der beiden Elektrodenpaare 4a, 4b besteht aus einer ringformigen äußeren Elekrode 4a und einer scheibenförmigen inneren Elektrode 4b, die von der ringförmigen äußeren Elektrode 4a unter Wahrung eines dazwischenliegenden Abstandes umgeben ist.

Vorzugsweise sind die beiden seitlichen Flächen der Aussparung, die einander mit Abstand gegenüberstehen, zumindest in Richtung der zentralen Längsachse der Aussparung so groß, daß sie über den Bereich hinausragen, den die Elektroden 4a, 4b der beiden Elektrodenpaare an diesen seitlichen Flächen der Aussparung 2 einnehmen. Dadurch wird sichergestellt, daß die äußeren Ringelektroden 4a der beiden Elektrodenpaare an ihren Rändern einen gewissen Mindestabstand zu einer inneren Wandfläche eines das flüssige Medium aufnehmenden Behälters oder Führungskanals oder einer sonstigen Innenfläche in diesem Behälter oder Führungskanal wahren, selbst dann, wenn der Meßwertaufnehmer in das Medium derart eingesetzt wird, daß der Sonderkörper 1 diese innere Wandfläche oder sonstige Innenfläche des Behälters oder Führungskanals berührt. Durch die Wahrung dieses Mindestabstandes der äußeren Ränder der Elektroden von irgendwelchen Flächen in dem das flüssige Medium aufnehmenden Behälter oder Führungskanal wird erreicht, daß ein während der Messung bestehendes elektrisches Feld, das zwischen den äußeren Rändern zweier gegenüberliegender Elektroden 4a längs nach außen gebogener Kraftlinien verläuft, durch Innenflächen des Behälters oder Führungskanals keinesfalls gestört wird und Verfälschungen des Meßergebnisses somit vermieden werden.

Die Elektroden eines jeden Elekrodenpaares 4a, 4b sind jeweils mit Leiterbahnen 5 verbunden, die auf Flächen der Leiterplatte 3 angeordnet und in die Leiterplatte eingebettet sind, so daß sie von der Leiterplatte 3 allseitig umhüllt sind. Die Kontaktbahnen 5 führen in der Darstellung von Fig. 1 und 2 nach oben und sind dort an einen Steckverbinder 6 angeschlossen, der am oberen Ende des Sondenkörpers 1 angeordnet und nur in Fig. 2 gezeigt ist. Die Leiterbahnen 5 sind einerseits an die jeweiligen Elektroden 4a bzw. 4b und andererseits an den Steckverbinder 6 derart angeschlossen, daß bei Anschluß einer nicht dargestellten externen Spannungsquelle und eines ebenfalls nicht dargestellten externen elektrischen Meßgerätes an den Steckverbinder 6 die ringförmigen äußeren Elektroden 4a der beiden Elektrodenpaare mit der vorgenannten Spannungsquelle verbunden sind, während die scheibenförmigen inneren Elektroden 4b der beiden Elektrodenpaare an dem vorgenannten Meßgerät liegen. Somit sind die ringförmigen äußeren Elektroden 4a als die Elektroden mit dem größeren Querschnitt als Stromelektroden geschaltet, während die scheibenförmigen inneren Elektroden als die Elektroden mit derm kleineren Querschnitt als Spannungselektroden dienen, mit denen der Spannungsabfall in dem als Widerstand wirkenden Medium praktisch leistungslos gemessen und damit die Leitfähigkeit des Mediums ermittelt wird.

Um die Gefahr einer Beschädigung der auf der Leiterplatte 3 angeordneten, vorzugsweise goldbeschichteten Elektroden 4a, 4b bei Biegebeanspruch der flexiblen Leiterplatte 3 zu vermeiden, kann die Leiterplatte im Bereich der Elektroden rückseitig mit biegesteifen Plättchen belegt sein, welche etwa die Größe des jeweiligen Elektrodenpaares aufweisen.

Als Meßgerät wird vorzugsweise ein Konduktometer verwendet.

Die Elektroden 4a, 4b der beiden Elektrodenpaare sind jeweils mit einem elektrisch leitenden Überzug versehen, welcher ein höheres elektrisches Normalpotential besitzt, d. h. edler ist als das Leitermaterial der Leiterbahnen 5. Ein auf die Leiterplatte 3 aufgebrachter Isolationsüberzug deckt die Leiterbahnen 5 mit Ausnahme der im Bereich des Steckverbinders 6 ausgebildeten Kontaktstellen ab und läßt auch die Elektroden 4a, 4b der Elekrodenpaare frei.

Ferner befindet sich auf der Leiterplatte 3 ebenfalls im Bereich der Aussparung 2 ein als Widerstands-Thermometer oder Temperaturfühler wirkender temperaturabhängiger Widerstand 7, der nur in Fig. 2 dargestellt und über nicht gesondert gezeigte, auf der Leiterplatte 3 angeordnete Leiterbahnen ebenfalls an den Steckverbinder 6 angeschlossen ist.

Die Leiterplatte 3 und die darauf angeordneten elektrischen Bauelemente sind vom Kunststoffmaterial des Sondenkörpers 1 umhüllt, wobei aber der Bereich der Elektroden 4a, 4b der beiden Elektrodenpaare und der Bereich des temperaturabhängigen Widerstandes 7 mit den zum Inneren der Aussparung 2 gerichteten Flächen freiliegt. Vorzugsweise ist der Sondenkörper 1 im Spritzgießverfahren ausgeformt, wobei die Leiterplatte 3 mit den auf ihr angeordneten elektrischen Bauelementen sowie auch der Steckverbinder 6 in den Sondenkörper 1 eingespritzt sind. Dadurch erübrigt sich eine gesonderte Montage und mechanische Verbindung der Leiterplatte 3 und des Steckverbinders 6 mit dem Sondenkörper 1.

Zur Erfassung der elektrolytischen Leitfähigkeit eines flüssigen Mediums wird der oben beschriebene Meßwertaufnehmer mit dem durch die Aussparung 2 enthaltenden unteren Bereich in dem Medium derart angeordnet, daß es durch die Aussparung 2 des Sondenkörpers 1 strömen und dabei die Elektroden 4a, 4b eines jeden Elektrodenpaares anströmen kann. Gleichzeitig wird an die ringförmigen äußeren Elektroden 4a eine von der externen Spannungsquelle gelieferte Wechselspannung oder andere ungleichförmige Spannung angelegt. Der Stromfluß durch das Medium wird gemessen. An den inneren Elektroden wird der Spannungsabfall am Medium gemessen. Aus den ermittelten Werten für Strom und Spannung wird die Leitfähigkeit errechnet.

Erläuternd wird hierzu noch darauf hingewiesen, daß entsprechend den Änderungen der angelegten Spannung sich ein elektrisches Feld ändert, das zwischen den gegenüberliegenden scheibenförmigen inneren Elektroden 4b erzeugt wird.

Das Streufeld der zwischen den beiden Elektrodenpaaren liegenden Meßstrecke liegt innerhalb des Meßwertaufnehmers, so daß ein nachteiliger Einfluß äußerer Störungen auf das Feld gering ist. Zusätzliche Abschirmeinrichtungen sind deshalb entbehrlich.

Eine etwaige Abhängigkeit des Meßergebnisses von der Temperatur des jeweiligen Mediums bei der Leitfähigkeitserfassung wird durch den temperaturabhängigen Widerstand 7 kompensiert.

In einer einfacheren Ausführungsform der Erfindung ist auch eine Zwei-Leiter-Sonde möglich.

Andererseits können ggf. auch mehr vier Elektroden vorgesehen werden.

Die freien Endteile der U-förmig gebogenen Leiterplatte können parallel zueinander übereinandergelegt sein, wie dies in Fig. 2 gezeigt ist, oder auch aus der nach oben gerichteten Fläche des Sondenkörpers 1 herausragen (nicht dargestellt), um mit Kontakten des Steckverbinders 6 verbunden zu werden.

Anstelle der U-förmig gebogenen Leiterplatte 13 können in nicht näher dargestellter Weise auch zwei separate, parallel zueinander angeordnete Leiterplatten vorgesehen werden, die ähnlich angeordnet werden wie die beiden Schenkel der in Fig. 1 und 2 dargestellten U-förmigen Leiterplatte 3.

Eine solche Anordnungsweise ermöglicht auch eine Aufteilung des Sondenkörpers 1 in zwei symmetrische Teilkörper, die mit achsparallelen Flächen längs einer achsparallelen Ebene, vorzugsweise der Symmetrieebene, aneinandersetzbar sind (in den Zeichnungen nicht dargestellt). In diesem Fall kann der Steckverbinder 6 auf die zusammengesetzten Teilkörper des Sondenkörpers 1 lösbar aufgesetzt und mit den Leiterbahnen 5 über lösbare Kontakte verbunden sein. Eine solche Bauweise ermöglicht eine besonders einfache Wartung der Elektroden durch vorübergehendes Lösen der beiden Teilkörper des Sondenlkörpers 1 voneinander, wodurch ein unbehinderter Zugang zu den Elektroden für Reinigungszwecke etc. möglich wird.

Insbesondere bei der Verwendung von einer größeren Anzahl von Elektoden können auch mehrere Leiterplatten vorgesehen werden (inö den Zeichnungen nicht dargestellt).

Auf der Leiterplatte 3 bzw. auf mehreren Leiterplatten des Meßwertaufnehmers können auch noch zusätzliche aktive oder passive Schaltungselemente angeordnet werden, z. B. Vorverstärker und/oder Schaltungselemente für die Signaltrennung oder anderweitige Signalverarbeitung (in den Zeichnungen nicht dargestellt).

## Patentansprüche

1. Messwertaufnehmer zur Erfassung der elektrischen Leitfähigkeit eines flüssigen Mediums, umfassend
- einen Sondenkörper (1) mit einer Aussparung (2), die am Sondenkörper als Durchgangsöffnung in Form eines an beiden Enden offenen, durch den Sondenkörper (1) hindurchreichenden und von diesem vollständig umschlossenen Kanals ausgebildet ist und bei Einsetzen des Sondenkörpers (1) in das Medium von diesem in axialer Richtung durchströmt wird,
- eine im Sondenkörper (1) angeordnete Leiterplatteneinrichtung mit mindestens einer Leiterplatte (3), wobei zwei plane Leiterplattenbereiche der mindestens einen Leiterplatte sich in der Aussparung (2) parallel zueinander gegenüberstehen, und
- mindestens zwei Elektroden (4a, 4b), die in der Aussparung (2) auf einander gegenüberstehenden Flächen der Leiterplattenbereiche der mindestens einen Leiterplatte (3) flächig ausgebildet und so angeordnet sind, dass sie mit ihren einander gegenüberliegenden Elektrodenflächen parallel zueinander und parallel zu den in der Aussparung (2) liegenden Leiterplattenbereichen ausgerichtet sind und von dem die Aussparung im Zwischenraum zwischen den Elektrodenflächen durchströmenden Medium anströmbar sind.

2. Meßwertaufnehmer nach Anspruch 1, bei welchem die Elektroden (4a, 4b) an einander gegenüberliegenden seitlichen Flächen der Aussparung (2) angeordnet sind und diese seitlichen Flächen über den äußeren Rand der Elektroden hinausragen.

3. Meßwertaufnehmer nach Anspruch 1 oder 2, bei welchem mindestens zwei Elektrodenpaare vorgesehen sind, wobei jedes Elektrodenpaar (4a, 4b) eine ringförmige äußere Elektrode (4a) und eine scheibenförmige innere Elektrode (4b) umfaßt, die von der ringförmigen äußeren Elektrode (4a) unter Bildung eines dazwischenliegenden Abstandes umgeben ist.

4. Meßwertaufnehmer nach Anspruch 3, bei welchem die einander gegenüberstehenden ringförmigen äußeren Elektroden (4a) und die einander gegenüberstehenden scheibenförmigen inneren Elektroden (4b) der beiden Elektrodenpaare an einen gemeinsamen Steckverbinder (6) angeschlossen sind.

5. Meßwertaufnehmer nach Anspruch 4, bei welchem die ringförmigen äußeren Elektroden (4a) an eine Spannungsquelle und die scheibenförmigen inneren Elektroden (4b) an ein Meßgerät anschließbar sind.

6. Meßwertaufnehmer nach einem der vorangehenden Ansprüche, bei welchem auf der Leiterplatte (3) im Bereich der Aussparung (2) ein temperaturabhängiger Widerstand (7) angeordnet ist.

7. Meßwertaufnehmer nach einem der vorangehenden Ansprüche, bei welchem die Leiterplatte (3) aus flexiblem Material besteht und im Bereich der auf ihr angeordneten Elektroden gegen Verbiegung versteift ist.

8. Meßwertaufnehmer nach einem der vorangehenden Ansprüche, bei welchem Leiterbahnen (5) von der Leiterplatte (3) allseitig umhüllt sind.

9. Meßwertaufnehmer nach einem der vorangehenden Ansprüche, bei welchem die Leiterplatte (3) U-förmig angeordnet ist.

10. Meßwertaufnehmer nach einem der vorangehenden Ansprüche, bei welchem der Sondenkörper (1) im Spritzgußverfahren hergestellt ist und die Leiterplatte mit den auf ihr angeordneten Bauelementen im Sondenkörper (1) umspritzt sind.

11. Meßwertaufnehmer nach einem der vorangehenden Ansprüche, bei welchem ein mit den Leiterbahnen (5) der Leiterplatte (3) verbundener Steckverbinder (6) an den Sondenkörper (1) angespritzt ist.

12. Meßwertaufnehmer nach einem der vorangehenden Ansprüche, bei welchem auf der Leiterplatte (3) weitere aktive oder passive Schaltungselemente angeordnet sind.

## Claims

1. Measuring sensor for detecting the electrical conductibility of a liquid medium, comprising
- a probe body (1) with a recess (2), which is constructed on the probe body as a through opening in the form of a channel open at both ends, reaching through the probe body (1) and completely surrounded by said probe body, and through which the medium flows in the axial direction when the probe body (1) is inserted into the medium,
- a printed circuit board device, arranged in the probe body (1), with at least one printed circuit board (3), wherein two flat printed circuit board areas of the at least one printed circuit board are parallel opposite one another in the recess (2) and
- at least two electrodes (4a, 4b), which are constructed as flat and arranged in the recess (2) on opposite faces of the printed circuit board areas of the at least one printed circuit board (3) in such a way that they are aligned with their opposite electrode faces parallel to one another and parallel to the printed circuit board areas located in the recess (2) and can be flowed against by the medium flowing through the recess in the intermediate space between the electrode faces.

2. Measuring sensor according to claim 1, in which the electrodes (4a, 4b) are arranged on opposite lateral faces of the recess (2) and these lateral faces project beyond the outer edge of the electrodes.

3. Measuring sensor according to claim 1 or 2, in which at least two pairs of electrodes are provided, wherein each pair of electrodes (4a, 4b) comprises an annular outer electrode (4a) and a discoid inner electrode (4b), surrounded by the annular outer electrode (4a) with formation of an intermediate space.

4. Measuring sensor according to claim 3, in which the annular outer electrodes (4a) opposite one another and the discoid inner electrodes (4b) opposite one another of the two pairs of electrodes are connected to a common connector (6).

5. Measuring sensor according to claim 4, in which the annular outer electrodes (4a) can be connected to a voltage source and the discoid inner electrodes (4b) to a measuring device.

6. Measuring sensor according to one of the preceding claims, in which a temperature-dependent resistance (7) is arranged on the printed circuit board (3) in the area of the recess (2).

7. Measuring sensor according to one of the preceding claims, in which the printed circuit board (3) consists of flexible material and is reinforced against bending in the area of the electrodes arranged on it.

8. Measuring sensor according to one of the preceding claims, in which strip conductors (5) are enveloped on all sides by the printed circuit board (3).

9. Measuring sensor according to one of the preceding claims, in which the printed circuit board (3) is arranged in a U-shape.

10. Measuring sensor according to one of the preceding claims, in which the probe body (1) is produced by the injection moulding process and the printed circuit board with the structural elements arranged on it is extrusion-coated in the probe body (1).

11. Measuring sensor according to one of the preceding claims, in which a connector (6) connected to the strip conductors (5) of the printed circuit board (3) is injected on to the probe body (1).

12. Measuring sensor according to one of the preceding claims, in which further active or passive circuit elements are arranged on the printed circuit board (3).

## Revendications

1. Capteur destiné à mesurer la conductibilité électrique d'un milieu liquide, comprenant
- un corps de sonde (1) muni d'une cavité (2), qui est conçue dans le corps de sonde comme un orifice de passage sous forme de canal ouvert aux deux extrémités, traversant de part en part le corps de sonde (1) et totalement entouré par celui-ci, et à travers laquelle cavité le milieu afflue dans le sens axial lorsque le corps de sonde (1) est mis en place dans le milieu,
- un système de plaquettes de circuits imprimés, disposé dans le corps de sonde (1) et comportant au moins une plaquette de circuits imprimés (3), sachant que deux zones planes d'au moins une plaquette de circuits imprimés sont disposées parallèlement en regard l'une de l'autre dans la cavité (2), et
- au moins deux électrodes (4a, 4b), qui sont conçues sous forme plane et sont disposées dans la cavité (2) sur des surfaces en regard l'une de l'autre des zones planes de la au moins une plaquette de circuits imprimés (3), de telle sorte qu'elles sont orientées avec leurs surfaces face à face parallèlement l'une à l'autre et parallèlement aux zones des plaquettes de circuits imprimés situées dans la cavité (2) et de telle sorte qu'elles puissent être mises en contact avec le milieu circulant à travers la cavité dans l'intervalle entre les surfaces des électrodes.

2. Capteur selon la revendication 1, dans lequel les électrodes (4a, 4b) sont disposées sur des surfaces latérales face à face de la cavité (2) et ces surfaces latérales s'avancent au-delà du bord extérieur des électrodes.

3. Capteur selon la revendication 1 ou 2, dans lequel il est prévu au moins deux paires d'électrodes, sachant que chaque paire d'électrodes (4a, 4b) comporte une électrode extérieure annulaire (4a) et une électrode intérieure plate (4b), qui est entourée par l'électrode extérieure annulaire (4a) en laissant un écart intermédiaire.

4. Capteur selon la revendication 3, dans lequel les électrodes extérieures annulaires (4a) face à face et les électrodes intérieures plates (4b) face à face des deux paires d'électrodes sont raccordées à un connecteur à fiches (6) commun.

5. Capteur selon la revendication 4, dans lequel les électrodes extérieures annulaires (4a) peuvent être raccordées à une source de tension et les électrodes intérieures plates (4b) peuvent être raccordées à un appareil de mesure.

6. Capteur selon une des revendications précédentes, dans lequel une résistance (7) dépendant de la température est disposée sur la plaquette de circuits imprimés (3) dans la zone de la cavité (2).

7. Capteur selon une des revendications précédentes, dans lequel la plaquette de circuits imprimés (3) est réalisée dans un matériau flexible et est renforcée pour éviter des déformations dans la zone, dans laquelle sont posées les électrodes.

8. Capteur selon une des revendications précédentes, dans lequel des pistes conductives (5) sont entourées de toutes parts par la plaquette de circuits imprimés (3).

9. Capteur selon une des revendications précédentes, dans lequel la plaquette de circuits imprimés (3) est disposée en forme de U.

10. Capteur selon une des revendications précédentes, dans lequel le corps de sonde (1) est fabriqué par un procédé de moulage par injection et la plaquette de circuits imprimés, avec les composants disposés sur celle-ci, est enveloppée par la matière injectée pour former le corps de sonde (1).

11. Capteur selon une des revendications précédentes, dans lequel un connecteur à fiches (6), relié aux pistes conductives (5) de la plaquette de circuits imprimés (3), est moulé contre le corps de sonde (1).

12. Capteur selon une des revendications précédentes, dans lequel d'autres composants actifs ou passifs sont disposés sur la plaquette de circuits imprimés (3).
